# EUROPEAN PATENT APPLICATION

(11) **EP 4 167 043 A1**
(43) Date of publication of application: **19.04.2023**
(21) Application number: 20941126.3
(22) Date of filing: 15.06.2020
(51) Int. Cl.: G05D 1/02

(54) **AUTONOMOUS MOVEMENT DEVICE, AUTONOMOUS MOVEMENT METHOD, AND PROGRAM**

(71) Applicant: Doog Inc., Tsukuba-shi, Ibaraki 305-0031 (JP)
(72) Inventor: OSHIMA Akira, Tsukuba-shi, Ibaraki 305-0031 (JP); KUNIYOSHI Hiroyasu, Tsukuba-shi, Ibaraki 305-0031 (JP); BANDO Shigeru, Tsukuba-shi, Ibaraki 305-0031 (JP); EGAWA Saku, Tsukuba-shi, Ibaraki 305-0031 (JP)
(74) Representative: V.O.
(86) International application number: PCT/JP2020/023468
(87) International publication number: WO 2021/255797

(57) **Abstract**

An autonomous movement device (100) includes a sensor (31) to detect a surrounding object, driven wheels (40), and a processor (10). The processor (10) acquires teaching control data, generates route data of a surrounding environment based on a point cloud detected by the sensor (31) while controlling the driven wheels (40) in accordance with the acquired teaching control data, and memorizes a movement path along which the autonomous movement device (100) moves in the generated route data.

## Description

### Technical Field

The present disclosure relates to an autonomous movement device, an autonomous movement method, and a program.

### Background Art

Conventionally, mobile robots have been used for article transportation in factories, guidance of persons in facilities, and the like. As a method for setting a movement path for such a mobile robot, a method in which a person teaches a movement path to the mobile robot has been used. For example, in Patent Literature 1, a movement path from a start point to a destination is set by causing the mobile robot to detect a person and follow the person until reaching the destination.

### Citation List

### Patent Literature

Patent Literature 1: Unexamined Japanese Patent Application Publication No. 2008-84135

### Summary of Invention

### Technical Problem

Although the mobile robot described in Patent Literature 1 is capable of setting a route by following a person, the routes that can be set include only a one-way route from a start point to a destination at the time of route setting. In order for the mobile robot to, for example, return from the destination to the start point, the mobile robot is required to be taught a return route by a person again.

The present disclosure has been made in consideration of the above-described situation, and an objective of the present disclosure is to provide an autonomous movement device and the like that are capable of using a taught route also in the opposite direction to the direction of movement at the time when the route was taught.

### Solution to Problem

In order to achieve the above-described objective, an autonomous movement device according to a first aspect of the present disclosure includes:
detection means for detecting a surrounding object;
movement means; and
control means,
in which the control means
   acquires teaching control data,
   generates route data of a surrounding environment based on a point cloud detected by the detection means while controlling the movement means in accordance with the acquired teaching control data, and
   memorizes a movement path, based on the generated route data.

The control means may,
recognize a following target from among objects detected by the detection means, and
acquire data for controlling the movement means to cause the autonomous movement device to follow the recognized following target as the teaching control data.

The control means may,
generate route data of a surrounding environment based on a point cloud detected by the detection means while controlling the movement means to cause the autonomous movement device to follow the recognized following target,
memorize a movement path along which the movement means moves in the generated route data, and
control the movement means to cause the autonomous movement device to move along the memorized movement path, and
the memorized movement path may include a movement path in a direction other than a direction of movement at a time when the autonomous movement device followed the following target.

The autonomous movement device further includes operation acquisition means for acquiring a user operation,
in which the control means may acquire the teaching control data by the operation acquisition means.

The movement means may,
at a time of controlling the movement means in accordance with the acquired teaching control data, perform control in such a way as to prevent the autonomous movement device from moving backward.

The control means may,
register a first point based on input of an instruction to start teaching, generate route data of a surrounding environment based on a point cloud detected by the detection means while controlling the movement means in accordance with the acquired teaching control data, and memorize a movement path along which the movement means moves in the generated route data,
register a second point based on input of an instruction to end teaching and terminates teaching,
record a movement path from the first point to the second point as a first teaching route,
generate a movement path from a predetermined point existing on the first teaching route to the first point or the second point, and
control the movement means to cause the autonomous movement device to move along the generated movement path.

The control means may,
by using the first teaching route in a backward direction, generate a movement path from the second point to the first point.

The control means may,
on the first teaching route, register a third point based on an instruction to start teaching, generate route data of a surrounding environment based on a point cloud detected by the detection means while controlling the movement means in accordance with the acquired teaching control data, and memorize a movement path along which the movement means moves in the generated route data,
register a fourth point based on an instruction to end teaching and terminate teaching,
record a movement path from the third point to the fourth point as a second teaching route, and
by using the first teaching route and the second teaching route, generate a movement path from a predetermined point existing on the first teaching route or the second teaching route to a point selected from among the first point, the second point, the third point, and the fourth point.

The control means may,
in a case of generating a movement path in an opposite direction to a direction of movement at a time of having controlled the movement means in accordance with the teaching control data,
convert data relating to a location of an object detected by the detection means to data in a case of detecting the object in a backward direction, and
based on the converted data, control the movement means to cause the autonomous movement device to move along the generated movement path.

The control means may
recognize an obstacle from among objects detected by the detection means, and
when the recognized obstacle is avoidable, control the movement means to cause the autonomous movement device to deviate from the movement path in order to avoid the obstacle and, after avoiding the obstacle, return to the movement path.

The detection means may detect a retro reflective material installed in surroundings, and
the control means may
record information about a retro reflective material detected by the detection means in the route data while controlling the movement means in accordance with the teaching control data, and
correct a location and direction of the autonomous movement device by comparing information about a retro reflective material detected by the detection means with information about a retro reflective material recorded in the route data while the autonomous movement device moves along the movement path.

The control means may
correct the route data by comparing data relating to a location of a surrounding object detected by the detection means with the route data while the autonomous movement device moves along the movement path.

The control means may
memorize a temporary stop position and a temporary stop time at a time of controlling the movement means in accordance with the teaching control data, and
when the autonomous movement device moves along the memorized movement path, the autonomous movement device may stop at the temporary stop position for the temporary stop time.

The control means may
memorize an output position at which a control signal to a predetermined device is output at a time of controlling the movement means in accordance with the teaching control data, and
when the autonomous movement device moves along the memorized movement path, output the control signal to the predetermined device at the output position.

The control means may
memorize a control velocity or a velocity mode at a time of controlling the movement means in accordance with the teaching control data, and
when the autonomous movement device moves along the memorized movement path, control the movement means to control movement velocity based on the memorized control velocity or velocity mode.

In addition, an autonomous movement method according to a second aspect of the present disclosure includes:
a teaching control data acquisition step of acquiring teaching control data;
a route generation step of generating route data of a surrounding environment based on a point cloud detected by detection means while controlling movement means in accordance with the acquired teaching-control-data; and
a movement path storage step of storing a movement path along which the movement means moves in the generated route data.

In addition, a program according to a third aspect of the present disclosure causes a computer to execute:
a teaching control data acquisition step of acquiring teaching control data;
a route generation step of generating route data of a surrounding environment based on a point cloud detected by detection means while controlling movement means in accordance with the acquired teaching control data; and
a movement path storage step of storing a movement path along which the movement means moves in the generated route data.

### Advantageous Effects of Invention

The present disclosure enables a taught route to be used also in the opposite direction to the direction of movement at the time when the route was taught.

### Brief Description of Drawings

FIG. 1 is a block diagram illustrating a functional configuration of an autonomous movement device according to Embodiment 1 of the present disclosure;
FIG. 2 is a diagram illustrating an external appearance of the autonomous movement device according to Embodiment 1;
FIG. 3 is a diagram illustrating an external appearance of a sensor that the autonomous movement device according to Embodiment 1 includes and a laser radiated from the sensor;
FIG. 4 is a diagram of the sensor and an operation acquirer that the autonomous movement device according to Embodiment 1 includes as viewed from a side face of the autonomous movement device;
FIG. 5 is a diagram illustrating a surrounding environment detected by the sensor according to Embodiment 1;
FIG. 6 is a diagram illustrating an example in which retro reflective materials are installed;
FIG. 7A is an explanatory diagram of a surrounding environment in the forward direction;
FIG. 7B is an explanatory diagram of a surrounding environment in the backward direction;
FIG. 8 is a flowchart of target following memorizing processing performed by the autonomous movement device according to Embodiment 1;
FIG. 9 is a diagram illustrating a case where the autonomous movement device according to Embodiment 1 is taught a route from a first point to a second point and a route from a third point to a fourth point;
FIG. 10 is a flowchart of playback processing performed by the autonomous movement device according to Embodiment 1;
FIG. 11 is a diagram illustrating a manner in which the autonomous movement device according to Embodiment 1 avoids obstacles;
FIG. 12 is a flowchart of playback correction processing performed by the autonomous movement device according to Embodiment 1; and
FIG. 13 is a diagram illustrating an external appearance of an autonomous movement device according to a variation of Embodiment 1.

### Description of Embodiments

An autonomous movement device according to an embodiment of the present disclosure is described below with reference to the drawings. Note that, in the drawings, the same or equivalent constituent elements are designated by the same reference numerals.

### Embodiment 1

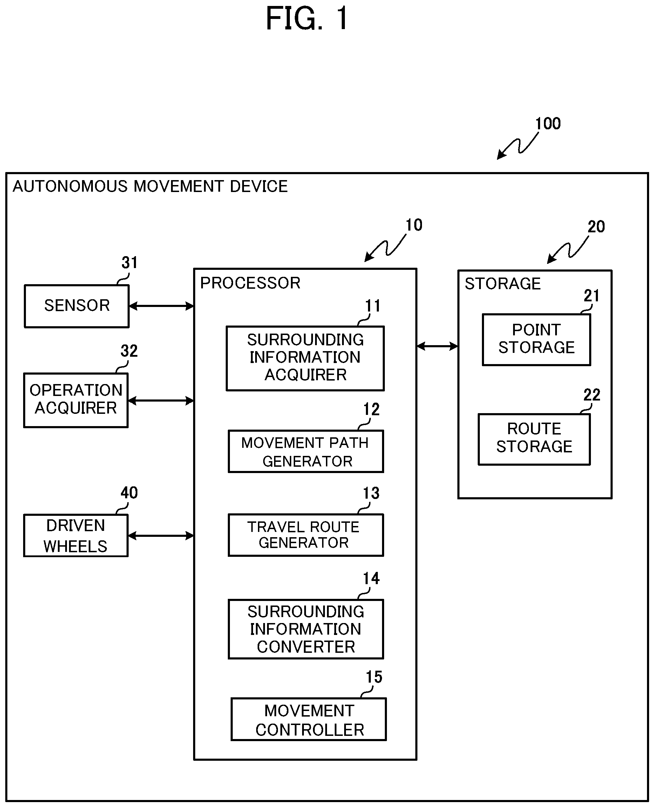

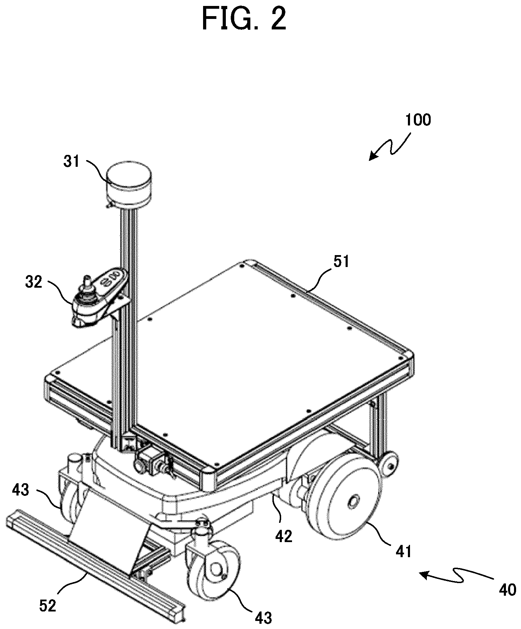

The autonomous movement device according to the embodiment of the present disclosure is a device that is taught a movement path and autonomously moves based on the taught movement path. An example of a functional configuration and an example of an external appearance of an autonomous movement device 100 according to Embodiment 1 are illustrated in FIGS. 1 and 2, respectively.

As illustrated in FIG. 1, the autonomous movement device 100 includes a processor 10, a storage 20, a sensor 31, an operation acquirer 32, and driven wheels 40.

The processor 10 includes a central processing unit (CPU) and the like and achieves functions of respective units (a surrounding information acquirer 11, a route generator 12, a movement path generator 13, a surrounding information converter 14, and a movement controller 15), which are described later, by executing programs memorized in the storage 20. The processor 10 also includes a clock (not illustrated) and is capable of acquiring a current date and time and counting elapsed time. The processor 10 functions as control means.

The storage 20 includes a read only memory (ROM), a random access memory (RAM), and the like, and a portion or all of the ROM is constituted by an electrically rewritable memory (a flash memory or the like). In the ROM, programs that the CPU of the processor 10 executes and data that are required in advance for the CPU to execute the programs are memorized. In the RAM, data that are generated or changed during execution of programs are memorized. The storage 20 functions as storage means. The storage 20 also includes a point storage 21 and a route storage 22, which are described later, as functional constituent elements.

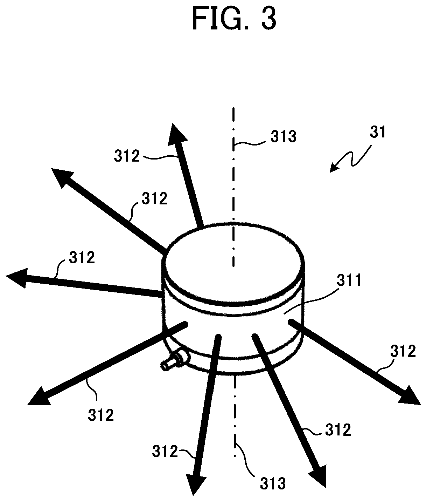

The sensor 31 includes a scanner-type LiDER (Light Detection and Ranging) and the like serving as sensing devices and detects objects, such as a person, a wall, an obstacle, and a retro reflective material, that exist in the surroundings of the autonomous movement device 100 (in the present embodiment, in the right, left, and front directions of the autonomous movement device 100) as a group of points (point cloud). The sensor 31 radiates a laser 312 from a light emitter that is disposed inside an optical window 311, as illustrated in FIG. 3 and captures a laser reflected by an object, such as a person, a wall, an obstacle, and a retro reflective material, by a light receiver that is disposed inside the optical window 311. In addition, the light emitter (and the light receiver) radiates the laser 312 while changing a scan angle by rotating 270 degrees (plus and minus 135 degrees when the straight forward direction of the autonomous movement device 100 is assumed to be 0 degrees) about a rotational axis 313 and thereby scans the surroundings. By processing a signal from the light receiver that captures a reflected laser, the sensor 31 is capable of, with respect to each scan angle, measuring distance to an object existing in the direction of the angle and received light intensity. Note that the above-described setting in which the range of rotation angle (scan angle) of the light emitter is set to "plus and minus 135 degrees when the straight forward direction of the autonomous movement device 100 is assumed to be 0 degrees" is only an example and a specification may stipulate that the light emitter rotates plus and minus 180 degrees or rotates plus and minus 100 degrees. In addition, the scan angle does not have to be bilaterally symmetric.

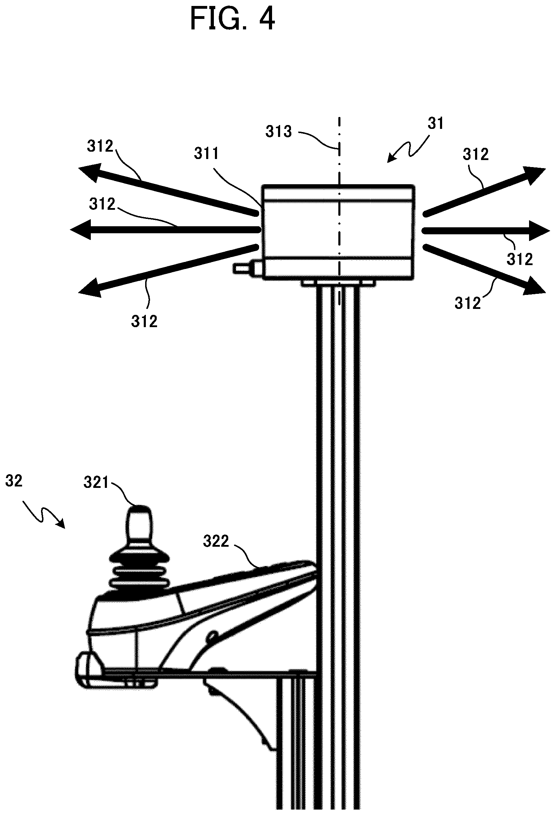

The sensor 31 has the rotational axis 313 of scan extending in the vertical direction, as illustrated in FIG. 4, and the laser 312 is configured to three-dimensionally scan an object (such as a person, a wall, an obstacle, and a retro reflective material) existing in the right and left directions and the forward direction of the autonomous movement device 100. The sensor 31 is capable of detecting an object when the sensor 31 can receive a laser reflected by the object by the light receiver, and is capable of detecting even an object existing at a position located, for example, 200 m away from the sensor 31. In addition, the three-dimensional scan performed by the sensor 31 enables a three-dimensional shape of an object to be detected. The sensor 31 functions as detection means. Note that the constituent element of the sensor 31 is not limited to a scanner-type LiDER (Light Detection and Ranging) and the sensor 31 may be constituted by a camera or another device capable of measuring distance and received light intensity.

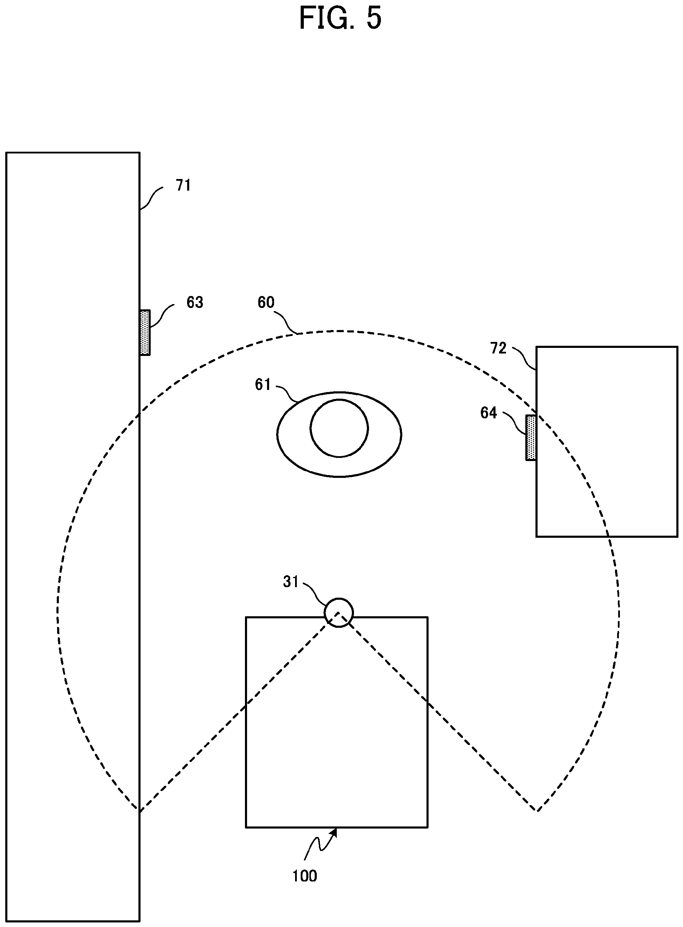

The sensor 31, for example, detects how far each of locations at which a wall 71 and a retro reflective material 63, a person 61, and an obstacle 72 and a retro reflective material 64 exist on the left side, in front, and on the right side of the autonomous movement device 100, respectively, is from the autonomous movement device 100, as illustrated in FIG. 5. Note that a dotted line 60 indicates an angle of a radiation range (270 degrees) of the laser radiated from the sensor 31 and does not indicate radiation distance. The laser is radiated to a range beyond the dotted line 60 in terms of distance, and, for example, the retro reflective material 63 is also detected. Note, however, that the laser is not radiated to an angular range of 90 degrees behind the autonomous movement device 100, as illustrated by the dotted line 60.

In addition, the processor 10 recognizes an object that the sensor 31 detected, based on information (distance to the object, received light intensity, and the like) that the processor 10 acquired from the sensor 31. For example, the processor 10 recognizes that an object is a retro reflective material (a so-called retro reflective materials) when a condition for recognizing the object as a retro reflective material, such as a condition requiring received light intensity to be more intense than a predetermined standard intensity, is satisfied. In addition, the processor 10 recognizes that an object is a person when a condition for recognizing the object as a person, such as a condition requiring width of the object to be approximately a width of a person (for example, 30 cm to 1 m), is satisfied. Further, the processor 10 recognizes that an object is a wall when a condition for recognizing the object as a wall, such as a condition requiring width of the object to be longer than a predetermined standard value, is satisfied. Furthermore, the processor 10 recognizes that an object is an obstacle when any conditions for recognizing the object as a retro reflective material, a person, and a wall are not satisfied. The processor 10 is capable of detecting more various objects in a stable manner by performing initial detection based on information acquired from the sensor 31 and tracking a detected object and, in the case of having lost sight of a detected object in the tracking, returning to a tracking state (returning from a tracking lost state). Note that the recognition method of an object described above is only an example and another recognition method may be used.

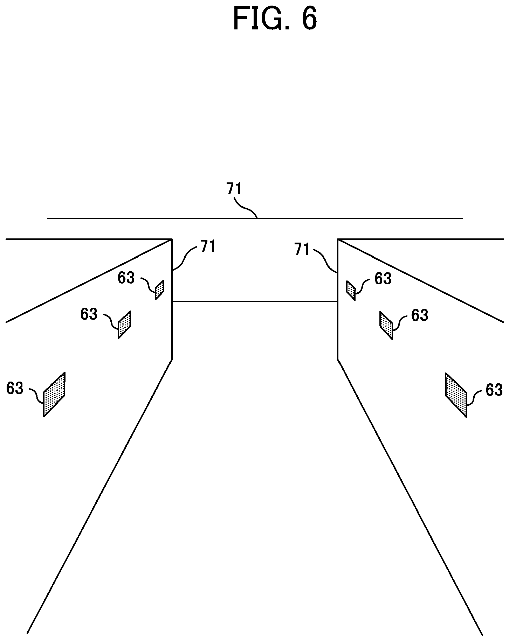

A retro reflective material that is one of objects that the sensor 31 detects is made of a retro reflective material and, when being irradiated with laser light, reflects the laser light in a direction in which the laser light is incident. Therefore, when received light intensity that the sensor 31 detected is higher than the predetermined standard intensity, the processor 10 can recognize that a retro reflective material exists in a direction at a scan angle at that moment in the scan by the sensor 31. For example, at a place with few features, such as a long corridor, little change occurs in information detected by the sensor 31 even when the autonomous movement device 100 moves along the corridor in the longitudinal direction, and it becomes difficult for the processor 10 to recognize how far the autonomous movement device 100 has moved in the longitudinal direction. Even in such a case, installing the retro reflective materials 63 on the wall 71 enables the processor 10 to recognize how far the autonomous movement device 100 has moved along the corridor in the longitudinal direction, based on the number of and an arrangement of detected retro reflective materials, as illustrated in FIG. 6, which enables construction of a more accurate map and stable travel.

Note that the retro reflective materials 63 are installed at locations that are irradiated with laser light radiated from the sensor 31 (in the present embodiment, locations having approximately the same height as the height of the sensor 31). In addition, the retro reflective material can be installed by applying paint including a retro reflective materials to a wall or the like, sticking a pressure sensitive adhesive tape including a retro reflective materials on a wall or the like, or suspending a rope or the like including a retro reflective materials (which may be produced by applying paint including a retro reflective materials to a general rope or the like or winding a pressure sensitive adhesive tape including a retro reflective materials around a general rope or the like) in the air.

Returning to FIG. 1, the operation acquirer 32 includes a joystick and the like that serve as input devices, and acquires a user operation. The operation acquirer 32 functions as operation acquisition means. As illustrated in FIG. 4, the operation acquirer 32 includes a lever 321 and a touch panel 322 that is integrated with a display panel. The user can instruct the autonomous movement device 100 on a travel direction and movement velocity by a direction in which the user tilts the lever 321 and a tilt amount (tilt angle), respectively. In addition, on the touch panel 322, an operation menu that serves as a user interface (UI) through which an instruction from the user is accepted (a menu for performing setting of a maximum velocity, a maximum acceleration, and the like and selection of a setting value for each thereof, specification of a destination, movement stop instruction, instruction of start and end of teaching, playback, playback correction, reverse playback, auto-determination playback, loop playback, or the like, selection of a movement mode (an autonomous movement mode, a manual movement mode, or the like), and the like) is displayed, and the user can provide the autonomous movement device 100 with each instruction by touching one of the instructions in the operation menu. The operation acquirer 32 functions as operation acquisition means.

Note that the operation acquirer 32 may be configured into an operation acquirer through which the user can, using physical buttons instead of a touch panel, provide instructions on teaching start, teaching end, playback start/end, playback correction start/end, reverse playback start/end, auto-determination playback start/end, loop playback start/end, and the like. Such physical buttons have high visibility at an outdoor work site or the like and improve convenience. Note that the reverse playback is playback processing that, by reproducing, in the backward direction, memorized data that is finally acquired through teaching, causes the autonomous movement device 100 to move in such a manner as to return from the teaching end point to the teaching start point. In addition, the auto-determination playback is playback processing performed to cause the autonomous movement device 100 to recognize the self-location. Further, the loop playback is playback processing that, by reproducing memorized data repeatedly, causes the autonomous movement device 100 to perform movement from the teaching start point to the teaching end point repeatedly (in order to normally perform the loop playback, it is required to perform teaching in such a way that the teaching end point coincides with the teaching start point).

In addition, types of teaching include not only target following teaching in which teaching is performed by causing the autonomous movement device 100 to follow a following target but also manual operation teaching in which teaching is performed by manually operating the autonomous movement device 100 using the joystick or the like of the operation acquirer 32. The user can also provide an instruction on which one of the target following teaching and the manual operation teaching is to be performed, through the operation acquirer 32. Although processing of the target following teaching is mainly described hereinbelow, since only difference between the target following teaching and the manual operation teaching is whether teaching control data is acquired by following a following target or acquired through the operation acquirer 32, the present disclosure is applicable to not only the target following teaching but also teaching through other arbitrary motion (teaching through hand-pushing travel, teaching based on input from an external system, or the like) including the manual operation teaching.

Returning to FIG. 1, the driven wheels 40 causes the autonomous movement device 100 to move, based on instructions (control) from the processor 10. The driven wheels 40 functions as movement means. As illustrated in FIG. 2, the driven wheels 40 includes wheels 41 of an independent two-wheel drive type, motors 42, and casters 43. The autonomous movement device 100 is capable of performing parallel movement (translational movement) in the longitudinal direction by driving the two wheels 41 in the same direction, rotation (direction change) on the spot by driving the two wheels 41 in the opposite directions, and turning movement (translational movement and rotation (direction change) movement) by individually driving the two wheels 41 at different velocities. In addition, a rotary encoder is attached to each of the wheels 41, and the processor 10 is capable of calculating the amount of translational movement and the amount of rotation by use of the numbers of rotations of the wheels 41 measured by the rotary encoders, diameter of the wheels 41, distance between the wheels 41, and the like.

For example, when diameter and the number of rotations of each of the wheels 41 are denoted by D and C, respectively, the amount of translational movement covered by ground contact points of the wheel 41 is calculated by π·D·C. In addition, when the diameter of each of the wheels 41 is denoted by D, the distance between the wheels 41 is denoted by I, the number of rotations of the right wheel 41 is denoted by CR, and the number of rotations of the left wheel 41 is denoted by CL, the amount of rotation in the direction change is calculated by 360° × D × (CL - CR) / (2 × I) (when the clockwise rotation is defined to be positive). The driven wheels 40 also functions as mechanical odometry by respectively adding the amounts of translational movement and the amounts of rotation successively, which enables the processor 10 to grasp the location (a location and direction based on a location and direction at the time of movement start) of the autonomous movement device 100.

Note that the autonomous movement device 100 may be configured to include crawlers instead of the wheels 41 or may be configured to include a plurality of (for example, two) legs and perform movement by walking using the legs. In these cases, as with the case of the wheels 41, it is also possible to measure a location and direction of the autonomous movement device 100 based on motion of the two crawlers, motion of the legs, or the like.

In addition, as illustrated in FIG. 2, the autonomous movement device 100 includes a loading platform 51 and is capable of mounting a transportation article and the like on the loading platform 51 and transporting the transportation article and the like to a destination. Further, the autonomous movement device 100 includes a bumper 52 and is capable of stopping when the autonomous movement device 100 collides with another object and mitigating impact of the collision.

Next, a functional configuration of the processor 10 of the autonomous movement device 100 is described. As illustrated in FIG. 1, the processor 10 functions as each of the surrounding information acquirer 11, the route generator 12, the movement path generator 13, the surrounding information converter 14, and the movement controller 15 and performs movement control and the like of the autonomous movement device 100.

The surrounding information acquirer 11 recognizes an object that the sensor 31 detected and acquires, as information about the object, type (classification as a person, an obstacle, a retro reflective material, or the like), distance, direction, and the like. In addition, when an instruction to start teaching is input to the operation acquirer 32, the surrounding information acquirer 11 recognizes a person existing in front of the autonomous movement device 100 as a following target.

The route generator 12 generates route data of a surrounding environment around the autonomous movement device 100 based on point cloud data detected by the sensor 31 (for example, a surrounding environment indicating an existence situation of objects (a wall, an obstacle, a retro reflective material, and the like) around the autonomous movement device 100 including locations (distance, direction, and the like) and the like of the obj ects). Any data format can be employed for the route data. The route generator 12 may generate route data by, for example, simultaneous localization and mapping (SLAM), using data detected by the sensor 31. The route generator 12 may also construct route data by, every time the autonomous movement device 100 moves a predetermined distance (for example, 10 cm), recording data detected by the sensor 31 (a surrounding environment indicating an existence situation of objects around the autonomous movement device 100) in the route storage 22, which is described later, in conjunction with information about a present location (self-location) of the autonomous movement device 100. In addition, the route generator 12 may acquire information about the present location (self-location) of the autonomous movement device 100, using values of the mechanical odometry obtainable from the driven wheels 40.

When the movement path generator 13 is provided with a destination, the movement path generator 13 generates a movement path from the present location of the autonomous movement device 100 to the provided destination based on the route data recorded in the route storage 22. Any generation method can be employed for the generation of a movement path. For example, when the present location of the autonomous movement device 100 is a location at which the autonomous movement device 100 was instructed to start teaching in past target following memorizing processing and the destination is a location at which the autonomous movement device 100 was instructed to end the teaching in the past target following memorizing processing, the movement path generator 13 may generate a route (teaching route) along which the autonomous movement device 100 followed a following target in the past target following memorizing processing as a movement path. In this case, the movement path generator 13 is to memorize a route along which the autonomous movement device 100 moved in the route data recorded in the route storage 22 as a movement path. In addition, the teaching route is not limited to a route along which the autonomous movement device 100 followed a following target, and, for example, a route along which the autonomous movement device 100 moved while being manually operated by use of the operation acquirer 32 may be set as a teaching route.

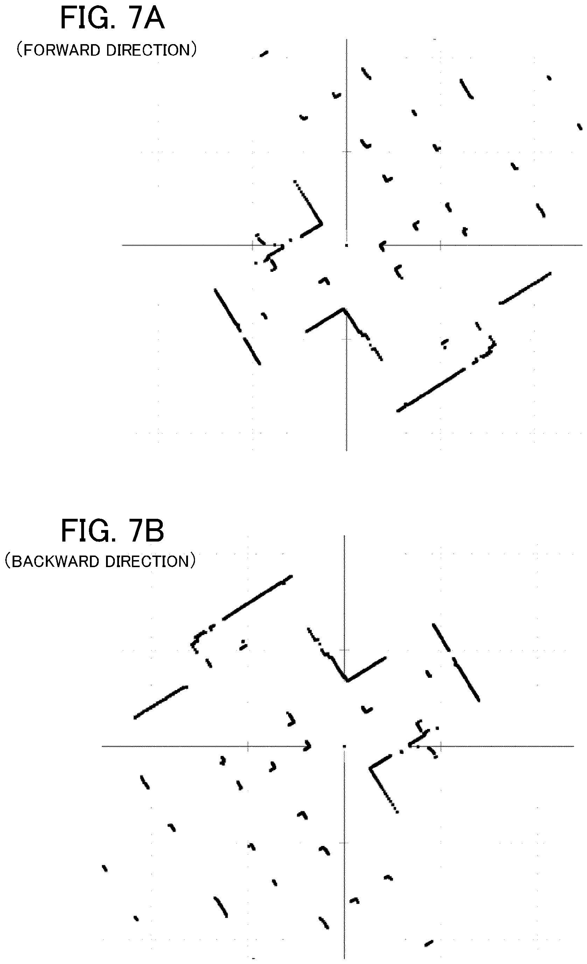

The surrounding information converter 14 converts information about objects in the surroundings of the autonomous movement device 100 (a surrounding environment) recorded in the route storage 22 to data in the backward direction. Data conversion performed by the surrounding information converter 14 is described below using FIGS. 7A and 7B. In the route storage 22, first, a surrounding environment in the forward direction as illustrated in FIG. 7A is recorded. The data in the backward direction is a surrounding environment (a surrounding environment illustrated in FIG. 7B) that is to be detected by the sensor 31 when the direction of the autonomous movement device 100 is set to a direction opposite to the direction of the autonomous movement device 100 at the time when the objects in the surroundings were detected by the sensor 31. The data in the backward direction are acquired by, with respect to the original data (the surrounding environment illustrated in FIG. 7A), reversing the forward direction to the backward direction and vice versa and the right direction to the left direction and vice versa (reversing the directions in such a way that an object having been observed ahead is observed behind and an object having been observed on the left side is observed on the right side).

The movement controller 15 controls the driven wheels 40 to cause the autonomous movement device 100 to move. For example, the movement controller 15 controls the driven wheels 40 in such a way that the autonomous movement device 100 follows a following target during a period from when an instruction to start teaching is input until an instruction to end teaching is input to the operation acquirer 32. In addition, when an instruction to start playback is input to the operation acquirer 32, the movement controller 15 controls the driven wheels 40 in such a way that the autonomous movement device 100 moves along a movement path that the movement path generator 13 generated. Further, when the operation mode is a manual movement mode, the movement controller 15 controls the driven wheels 40 based on an instruction from the user that is acquired by the operation acquirer 32.

Next, a functional configuration of the storage 20 is described. The storage 20 includes the point storage 21 and the route storage 22.

In the point storage 21, data for determining the location (for example, a movement start location and a movement end location (destination)) of the autonomous movement device 100, based on a user operation acquired by the operation acquirer 32, are registered. For example, when an instruction to start teaching is input to the operation acquirer 32, a surrounding environment that is detected by the sensor 31 at the location and direction of the autonomous movement device 100 at that moment are registered in the point storage 21 as point data (first point data) at a teaching start point (first point).

In the route storage 22, route data that is generated by the route generator 12 based on a surrounding environment detected by the sensor 31 is recorded. A route (teaching route) at the time when the autonomous movement device 100 follows a following target in target following memorizing processing, which is described later, is also memorized in the route storage 22.

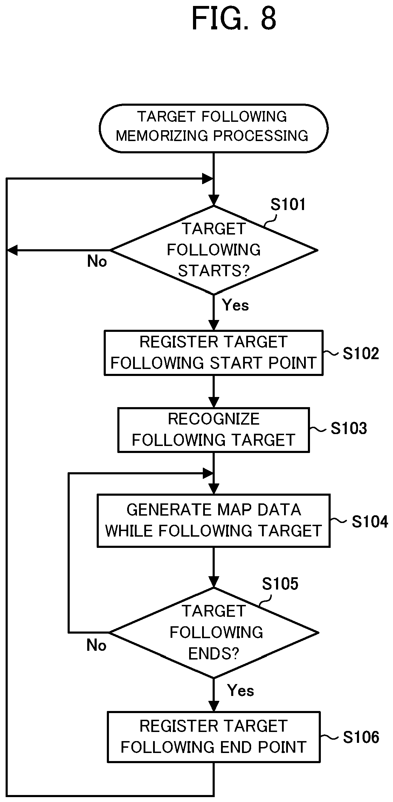

Next, the target following memorizing processing of the autonomous movement device 100 is described below with reference to FIG. 8. Note that, when the autonomous movement device 100 is activated, the target following memorizing processing and playback processing, playback correction processing, and the like, which are described later, are started in parallel with one another and the autonomous movement device 100 is brought into a state of waiting for input of a user instruction from the operation acquirer 32.

First, the processor 10 determines whether or not an instruction to start teaching has been input from the operation acquirer 32 (step S101). When no instruction to start teaching has been input (step S101; No), the process returns to step S101. When an instruction to start teaching is input (step S101; Yes), the processor 10 registers a surrounding environment detected by the sensor 31 in the point storage 21 as point data (first point data) at a teaching start point (first point) (step S102). Note that, when route data have already been recorded in the route storage 22, the processor 10 grasps to what location in the route data the teaching start point corresponds.

The surrounding information acquirer 11 recognizes the user existing in front of the autonomous movement device 100 as a following target by the sensor 31 (step S103). Step S103 is also referred to as a following target recognition step. Note that steps S102 and S103 do not have to be executed in this order and, for example, step S102 may be executed after step S103 has been executed. In addition, when the manual operation teaching is performed, the processing in step S103 is unnecessary.

Next, the processor 10 acquires data for controlling the driven wheels 40 to cause the autonomous movement device 100 to follow the following target recognized by the surrounding information acquirer 11 as teaching control data, the route generator 12 generates route data of a surrounding environment around the autonomous movement device 100 while the movement controller 15 controls the driven wheels 40 in accordance with the teaching control data (step S104), and the route generator 12 records the route data in the route storage 22. Note that, in the case of manual operation teaching, the processor 10 acquires teaching control data for controlling the driven wheels 40 from the operation acquirer 32. Among the processing in step S104, the processing in which the processor 10 acquires the teaching control data is referred to as a teaching control data acquisition step and the processing in which the route generator 12 generates route data is referred to as a route generation step. Note that, when retro reflective materials are recognized by the surrounding information acquirer 11, the route generator 12 also records the locations and the number of the retro reflective materials in the route storage 22 by including the locations and the number in the route data.

Even at a position with few features, such as a long corridor, installing retro reflective materials at some places (sticking the retro reflective materials on a wall or the like) enables information about locations at which the retro reflective materials exist and the number of the retro reflective materials to be recorded in the route storage 22. This configuration enables the processor 10 to match recognized information about retro reflective materials with the recorded information about the locations and the number of the retro reflective materials and thereby grasp the self-location of the autonomous movement device 100 more accurately at the time of playback processing, which is described later.

In addition, in step S104, the movement path generator 13 records, in the route storage 22, a route itself along which the autonomous movement device 100 follows the following target as a teaching route. The processing is referred to as a movement path storage step. In step S104, the movement controller 15 controls the driven wheels 40 in such a way that, even when the following target moves backwards, the autonomous movement device 100 does not move backwards (for example, stops). That is, the movement controller 15 is configured not to instruct the driven wheels 40 to move backwards while the autonomous movement device 100 follows the following target. This is because, when a section in which backward movement processing is performed is included in a teaching route that is used as a movement path, there is a possibility that the movement processing becomes complex at the time of playback processing, which is described later. Therefore, in the case of not only the target following teaching but also the manual operation teaching, the movement controller 15 may control the driven wheels 40 to prevent the autonomous movement device 100 from moving backwards.

Next, the processor 10 determines whether or not an instruction to end teaching has been input from the operation acquirer 32 (step S105). When no instruction to end teaching has been input (step S105; No), the process returns to step S104. When an instruction to end teaching is input (step S105; Yes), the processor 10 registers a surrounding environment detected by the sensor 31 in the point storage 21 as point data (second point data) at a teaching end point (second point) (step S106), and the process returns to step S101.

The target following memorizing processing was described above. The target following memorizing processing causes final memorized data (data for controlling the autonomous movement device 100 to move from the teaching start point to the teaching end point along the teaching route) to be generated. Note that, although, in the above description, the teaching start point and the teaching end point were described as a first point and a second point, respectively, the description only applies to a case where such points are registered in the point storage 21 for the first time. For example, when, after the first point and the second point were registered in the point storage 21, the process returns to step S101 and an instruction to start teaching is further input, a teaching start point and a teaching end point in the new teaching are registered as a third point and a fourth point, respectively, in the point storage 21. As described above, a point at which an instruction to start teaching is input and a point at which an instruction to end teaching is input are to be registered in the point storage 21 in a cumulative manner.

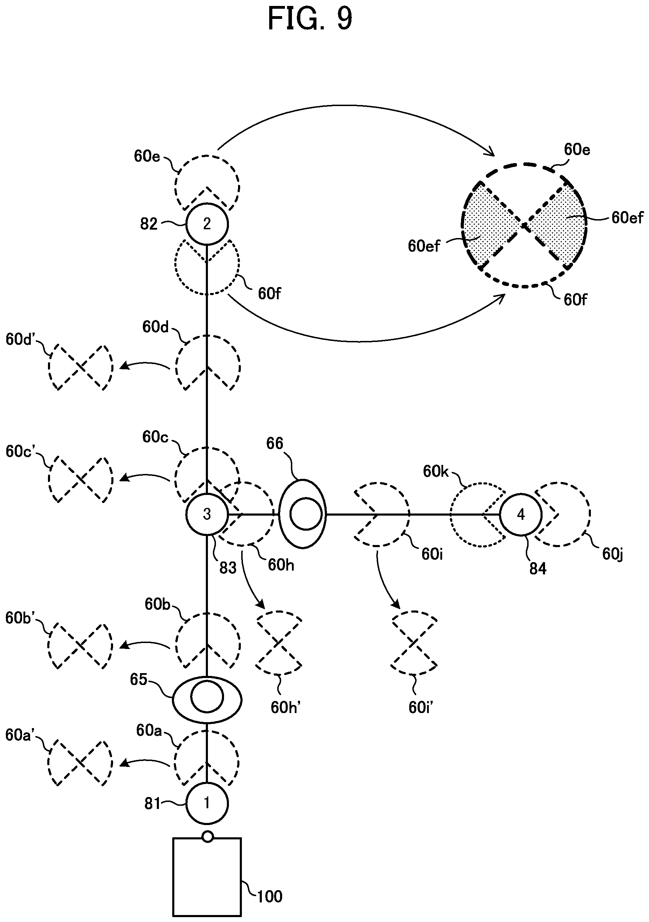

An example of the target following memorizing processing is described below with reference to FIG. 9. It is assumed that, first, the autonomous movement device 100 receives an instruction to start teaching from a user 65 at a location of a first point 81 (step S101). Then, the processor 10 registers a surrounding environment 60a detected by the sensor 31 in the point storage 21 as first point data (step S102). The surrounding information acquirer 11 recognizes the user 65 as a following target (step S103).

Although, when the user 65 subsequently walks to a second point 82, the autonomous movement device 100, following the user 65, also moves to the second point 82, the route generator 12 generates route data of a surrounding environment based on data detected by the sensor 31 (for example, surrounding environments 60b, 60c, and 60d) during movement (step S104) and records the generated route data in the route storage 22.

When the user 65 inputs an instruction to end teaching in the operation acquirer 32 at the second point 82 (step S 105), the processor 10 registers a surrounding environment 60e detected by the sensor 31 in the point storage 21 as second point data (step S105). In addition, the processor 10 also records a route from the first point 81 to the second point 82 (first teaching route) in the route storage 22.

It is assumed that, subsequently, the autonomous movement device 100 receives an instruction to start teaching from a user 66 while the autonomous movement device 100 faces in a direction toward a fourth point 84 at a location of a third point 83 (step S101). Then, the processor 10 registers a surrounding environment 60h detected by the sensor 31 in the point storage 21 as third point data (step S102). The surrounding information acquirer 11 recognizes the user 66 as a following target (step S103).

Although, when the user 66 subsequently walks to the fourth point 84, the autonomous movement device 100, following the user 66, also moves to the fourth point 84, the route generator 12 generates route data of a surrounding environment based on data detected by the sensor 31 (for example, a surrounding environment 60i) during movement (step S104) and records the generated route data in the route storage 22.

When the user 66 inputs an instruction to end teaching in the operation acquirer 32 at the fourth point 84 (step S105), the processor 10 registers a surrounding environment 60j detected by the sensor 31 in the point storage 21 as fourth point data (step S105). In addition, the processor 10 also records a route from the third point 83 to the fourth point 84 (second teaching route) in the route storage 22.

In this way, point data of respective points are registered in the point storage 21, and route data and teaching routes are recorded in the route storage 22.

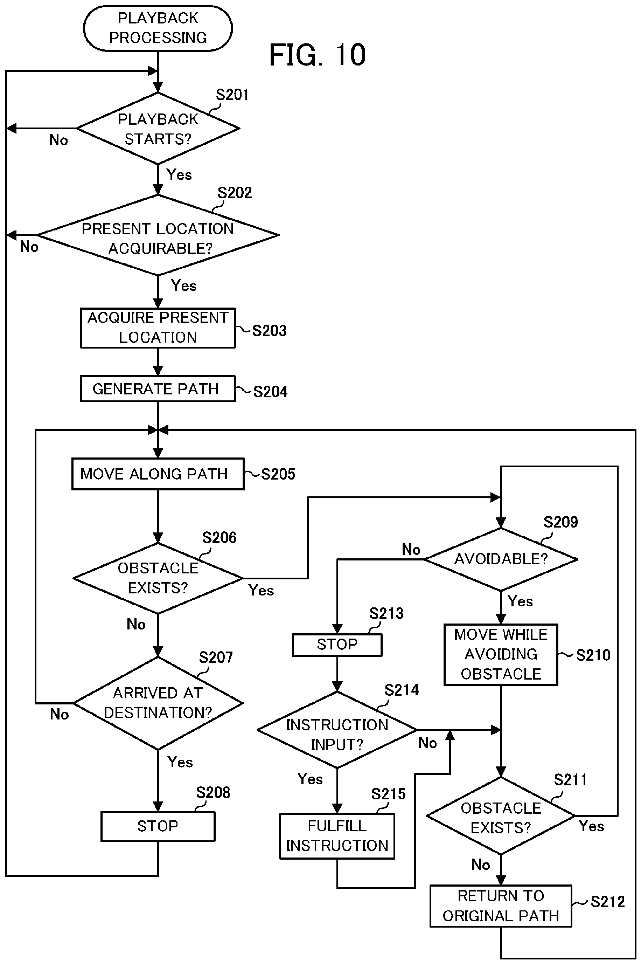

Next, the playback processing of the autonomous movement device 100 is described below with reference to FIG. 10. As described above, execution of the playback processing is also started when the autonomous movement device 100 is activated, and the autonomous movement device 100 is brought into a state of waiting for input of a user instruction from the operation acquirer 32.

First, the processor 10 determines whether or not an instruction to start playback has been input from the operation acquirer 32 (step S201). When no instruction to start playback has been input (step S201; No), the process returns to step S201. When an instruction to start playback is input (step S201; Yes), the processor 10 determines whether or not the present location of the autonomous movement device 100 can be acquired (step S202).

In this processing, any acquisition method can be employed for the acquisition of the present location. For example, the processor 10 may acquire the present location of the autonomous movement device 100, using SLAM. The processor 10 may also acquire the present location by comparing data acquired by the sensor 31 with data of the respective points registered in the point storage 21. A supplementary description on a method for acquiring the present location by comparing data acquired by the sensor 31 with data of the respective points registered in the point storage 21 is provided below.

Since, in whatever direction the autonomous movement device 100 faces, there occurs some degree of overlap between angular ranges of data acquired by the sensor 31, matching overlapping portions with each other enables whether or not the present location is a point registered in the point storage 21 to be determined and, when the present location is one of the registered points, also enables which one of the registered points the present location is to be determined. For example, a case is assumed where the sensor 31 has acquired data in an angular range of 270 degrees and the present location of the autonomous movement device 100 is the second point 82.

In this case, as illustrated in FIG. 9, data detected by the sensor 31 when the autonomous movement device 100 located at the second point 82 faces in a direction opposite to the direction toward the first point 81 is a surrounding environment 60e and data detected by the sensor 31 when the autonomous movement device 100 faces in the direction toward the first point is a surrounding environment 60f, as a result of which there is an overlapping portion between the surrounding environment 60e and the surrounding environment 60f, as illustrated by shaded portions 60ef. Therefore, when surrounding environments are compared with each other, the comparison is, for example, performed while one of the surrounding environments is gradually rotated, and, when halves or more (portions equivalent to 180 degrees or more) of the surrounding environments match with each other, the surrounding environment can be estimated to be surrounding environment acquired at an identical point.

In this way, the processor 10 is capable of acquiring which one of the points registered in the point storage 21 the present location of the autonomous movement device 100 is by comparing a surrounding environment detected by the sensor 31 with data of the respective points registered in the point storage 21. Note that, when data detected by the sensor 31 do not match with data of any point registered in the point storage 21, it is impossible to acquire the present location and the determination in step S202 results in No.

Returning to step S202 in FIG. 10, when the processor 10 cannot acquire the present location of the autonomous movement device 100 (step S202; No), the process returns to step S201. When the processor 10 can acquire the present location of the autonomous movement device 100 (step S202; Yes), the processor 10 acquires the present location (step S203).

The movement path generator 13 generates a movement path from the present location of the autonomous movement device 100 to a destination (step S204). Step S204 is also referred to as a movement path generation step. In this processing, any point registered in the point storage 21 can be selected as the destination. When only two points are registered in the point storage 21 and one the two points is the present location, the destination is the other point, which is not the present location. In the other cases, the user is required to input which one of the registered points (except the present location) is selected as a destination, from the operation acquirer 32.

The movement path generator 13 generates a movement path from the present location to the destination based on the route data recorded in the route storage 22. Any generation method can be employed for the generation of a movement path. The movement path generator 13 may generate a shortest route from the present location to the destination, using a path acquired from the route data along which the autonomous movement device 100 can move or may generate a movement path based on a teaching route that was recorded at the time of target following memorizing processing. In addition, when, for example, the present location is the teaching end point and the destination is the teaching start point, the movement path generator 13 may generate, as a movement path, a route that tracks the teaching route recorded at the time of target following memorizing processing in the backward direction. The following description is made assuming that the movement path generator 13 generates a movement path, using a teaching route and a route that tracks the teaching route in the backward direction.

When the movement path generator 13 generates, as a movement path, a route that tracks a teaching route recorded at the time of target following memorizing processing in the backward direction, the surrounding information converter 14 converts, among route data related to the teaching route memorized in the route storage 22, a surrounding environment detected by the sensor 31 to data in the case where the surrounding environment is detected in the backward direction (backward direction data) and records the converted data in the route storage 22. The backward direction data enables the autonomous movement device 100 to easily track the teaching route in the backward direction.

When a movement path is generated by the movement path generator 13 in step S204, the movement controller 15 controls the driven wheels 40 to cause the autonomous movement device 100 to move along the movement path (step S205). Step S205 is also referred to as a route movement step. During this movement, the processor 10 grasps the present location and direction of the autonomous movement device 100, using the surrounding environment detected by the sensor 31 and the route data recorded in the route storage 22.

Note that, when information about an arrangement and the number of retro reflective materials is recorded in the route data, the processor 10 preferentially matches information about retro reflective materials (locations and the number of the retro reflective materials) recognized by the surrounding information acquirer 11 with the route data when the processor 10 grasps the present location and direction of the autonomous movement device 100. When a state in which the information about retro reflective materials does not match with the route data (for example, the numbers of retro reflective materials differ from each other) persists for a predetermined period (for example, 10 seconds) or for a predetermined movement distance (for example, 10 m), the processor 10 may cause the autonomous movement device 100 to stop. This is because the locations and the number of retro reflective materials can be recognized by the sensor 31 with high precision compared with other general objects and the fact that, despite the advantage, the state in which the information about retro reflective materials does not match with the route data has persisted for a predetermined period or movement distance means that it is highly possible that the autonomous movement device 100 has deviated from the original route.

The processor 10 determines whether or not an obstacle exists in a travel direction, using the surrounding environment detected by the sensor 31 (step S206). When the processor 10 determines that no obstacle exists in the travel direction (step S206; No), the processor 10 determines whether or not the autonomous movement device 100 has arrived at the destination by comparing the surrounding environment detected by the sensor 31 with the point data registered in the point storage 21 (step S207). This determination can be performed by determining whether or not the acquired present location is the same as the destination in a similar manner to the above-described present location acquisition in step S203.

When the autonomous movement device 100 has not arrived at the destination (step S207; No), the process returns to step S205. When the autonomous movement device 100 arrives at the destination (step S207; Yes), the movement controller 15 causes the driven wheels 40 to stop (step S208), and the process returns to step S201.

In contrast, when, in step S206, the processor 10 determines that an obstacle exists in the travel direction (step S206; Yes), the processor 10 determines whether or not the obstacle is avoidable (step S209). In the present embodiment, when the following two conditions are satisfied, the processor 10 determines that the obstacle is avoidable.
(1) The obstacle can be avoided as long as the processor 10 does not lose sight of the present location (self-location) of the autonomous movement device 100 (for example, the processor 10 is able to grasp the self-location by comparing the surrounding environment detected by the sensor 31 with the route data recorded in the route storage 22).
(2) Between the obstacle and another obstacle or a wall, a space having width that allows the autonomous movement device 100 to pass through the space exists.

When the processor 10 determines that the obstacle is avoidable (step S209; Yes), the autonomous movement device 100 moves while avoiding the obstacle by the movement controller 15 controlling the driven wheels 40 to avoid the obstacle (step S210). The processor 10 determines whether or not an obstacle exists in the travel direction again, using data detected by the sensor 31 (step S211). When an obstacle exists (step S211; Yes), the process returns to step S209.

When no obstacle exists (step S211; No), the autonomous movement device 100 returns to the original movement path by the movement controller 15 controlling the driven wheels 40 to return to the original movement path (step S212), and the process returns to step S205. Since, as described above, avoidance of an obstacle is performed as long as the processor 10 does not lose sight of the present location of the autonomous movement device 100, the autonomous movement device 100 is capable of returning to the original movement path by moving with the movement controller 15 controlling the driven wheels 40 in such a way as to reduce a difference between the present location and a location on the original movement path.

In contrast, when, in step S209, the processor 10 determines that the obstacle is unavoidable (step S209; No), the movement controller 15 causes the driven wheels 40 to stop (step S213). The processor 10 determines whether or not a user instruction has been input from the operation acquirer 32 (step S214). When no user instruction has been input (step S214; No), the process returns to step S211. This is because there is a possibility that the obstacle has been removed as time passes.

When a user instruction has been input (step S214; Yes), the processor 10 fulfills the user instruction (step S215), and the process proceeds to step S211. In step S215, it is conceivable that, for example, a user instruction causes the autonomous movement device 100 to move to a position where there is no obstacle or a position where the obstacle is avoidable.

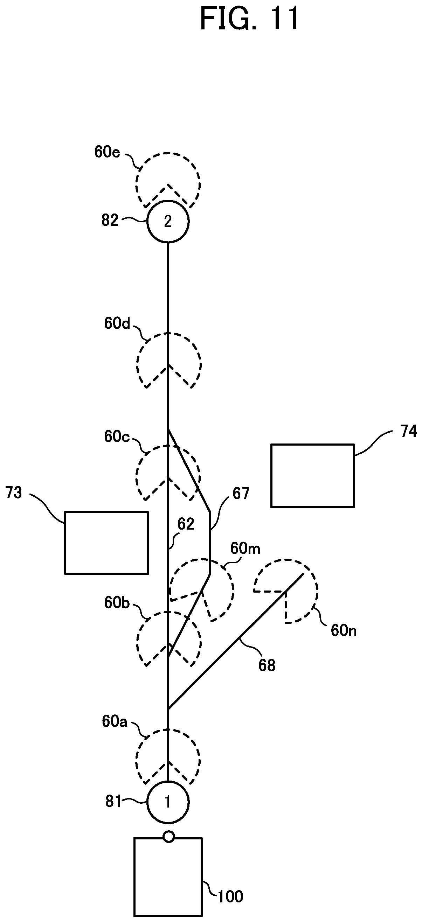

A supplementary description on obstacle avoidance in the above-described playback processing is provided below with reference to FIG. 11. For example, a case is assumed where the autonomous movement device 100 detects an obstacle 73 and an obstacle 74 during movement from the first point 81 to the second point 82. In this case, as illustrated in FIG. 11, in order to avoid the obstacles, the autonomous movement device 100 is required to shift the travel direction slightly rightward (move along an avoidance path 67 instead of the original movement path 62). Since a difference between the surrounding environments 60b and 60c that are detected by the sensor 31 at the time when the autonomous movement device 100 moves along the original movement path 62 and a surrounding environment 60m that is detected by the sensor 31 at the time when the autonomous movement device 100 moves along the avoidance path 67 is small, it is considered that there is no chance that the processor 10 loses sight of the self-location of the autonomous movement device 100. In addition, as illustrated in FIG. 11, between the obstacle 73 and the obstacle 74, a space having width that allows the autonomous movement device 100 to pass through the space exists. Therefore, in this case, the processor 10 determines that the obstacles are avoidable.

As a next example, a case where the autonomous movement device 100 cannot avoid the obstacle 73 unless the autonomous movement device 100 moves along an avoidance path 68, such as a case where the obstacle 73 protrudes to the right side of the avoidance path 67 illustrated in FIG. 11, is assumed. In this case, since a difference between the surrounding environments 60b and 60c that are detected by the sensor 31 at the time when the autonomous movement device 100 moves along the original movement path 62 and a surrounding environment 60n that is detected by the sensor 31 at the time when the autonomous movement device 100 moves along the avoidance path 68 is large and it is highly possible that the processor 10 loses sight of the self-location of the autonomous movement device 100, the processor 10 determines that the obstacle is unavoidable.

In addition, when no space having width that allows the autonomous movement device 100 to pass through the space exists between the obstacle 73 and the obstacle 74, such as a case where, even though the autonomous movement device 100 can avoid the obstacle 73 as long as the processor 10 does not lose sight of the self-location of the autonomous movement device 100, the obstacle 74 exists at a location closer to the obstacle 73 than the above-described case, the processor 10 determines that the obstacles are unavoidable.

The playback processing was described above. An example of the playback processing is described below with reference to FIG. 9. First, it is assumed that teaching has been performed in advance by the above-described target following memorizing processing, in which the autonomous movement device 100 followed the user from the first point 81 to the second point 82. It is also assumed that, as a result of the target following memorizing processing, the first point data and the second point data are registered in the point storage 21 and a route from the first point 81 to the second point 82 (first teaching route) and a surrounding environment along the route are recorded in the route storage 22.

It is assumed that the autonomous movement device 100 receives an instruction to start playback from the user when the autonomous movement device 100 is located at the second point 82 while facing in the direction toward the first point 81 (step S201). Then, the processor 10 determines whether or not the present location of the autonomous movement device 100 can be acquired (step S202). In this example, the processor 10 compares the surrounding environment 60f detected by the sensor 31 with the first point data (the surrounding environment 60a) and the second point data (the surrounding environment 60e) that are registered in the point storage 21.

Then, since, as described above, the surrounding environment 60f and the surrounding environment 60e match with each other in portions indicated by the shaded portions 60ef in FIG. 9, the processor 10 can determine that the present location is the second point 82. Therefore, the determination in step S202 results in Yes, and the processor 10 acquires the second point 82 as the present location (step S203).

The movement path generator 13 generates a movement path from the present location to the destination (step S204). In this example, since only the first point data and the second point data are registered in the point storage 21 and the present location is the second point 82, the first point 81 is set as the destination. The movement path generator 13 generates, as a movement path from the second point 82 to the first point 81, a route that tracks the first teaching route, which was recorded in the route storage 22 at the time of the target following memorizing processing, in the backward direction.

The surrounding information converter 14 converts, among the data memorized in the route storage 22, the surrounding environments 60a, 60b, 60c, and 60d, which were detected by the sensor 31 when the autonomous movement device 100 followed the user, to data in the case where the surrounding environments are detected in the backward direction and thereby generates backward direction data (backward direction data 60a', 60b', 60c', and 60d'), and records the backward direction data in the route storage 22.

Note that, in the present embodiment, since the sensor 31 detects a surrounding environment within an angular range of 270 degrees, the sensor 31 cannot detect data in an angular range of 90 degrees behind the autonomous movement device 100. Therefore, as illustrated in FIG. 9, when the surrounding environments are converted to data in the case where surrounding environments are detected in the backward direction, data in an angular range of 90 degrees in front of the autonomous movement device 100 cannot be generated, and the backward direction data 60a', 60b', 60c', and 60d' become data in an angular range of 90 degrees on each of the right and left sides. Even such data can be matched with a surrounding environment detected by the sensor 31, as described in the above-described present location acquisition in step S203. Needless to say, when a device capable of detecting a surrounding environment in an angular range of 360 degrees is used as the sensor 31, it is possible to convert a surrounding environment acquired at the time of target following teaching to backward direction data in the angular range of 360 degrees.

In addition, the autonomous movement device 100 is capable of, by moving, detecting surrounding environments by the sensor 31 at various positions and from various directions. Thus, even when an angular range that the sensor 31 can detect is limited (for example, to 180 degrees or less), integrating surrounding environments detected at various positions and from various directions by using a plurality of pieces of detection data or the like enables a surrounding environment in the forward direction as illustrated in FIG. 7A to be acquired, and the surrounding information converter 14 is capable of converting the surrounding environment in the forward direction to surrounding environment in the backward direction. Note that, even when the sensor 31 is a device capable of acquiring 3D data, the surrounding information converter 14 is capable of converting a surrounding environment in a similar manner.

While the processor 10, by comparing a surrounding environment detected by the sensor 31 with the backward direction data (for example, the backward direction data 60a', 60b', 60c', and 60d') generated by the surrounding information converter 14, grasps the present location and direction of the autonomous movement device 100, the movement controller 15 controls the driven wheels 40 to cause the autonomous movement device 100 to move along the movement path (step S205). In the example in FIG. 9, since there exists no obstacle, the determination in step S206 results in No, and the autonomous movement device 100 keeps moving along the movement path until reaching the destination (first point 81) and, when arriving at the destination (first point 81) (step S207; Yes), stops (step S208).

In this way, the autonomous movement device 100 is capable of moving along a taught route, using the taught route in a direction (in the above-described example, the backward direction) other than the direction of movement at the time when the route was taught. Because of this configuration, the autonomous movement device 100 enables a more flexible route generation and operation.

Note that, when the autonomous movement device 100 receives an instruction to start playback from the user while facing in a direction opposite to the direction toward the first point 81 and being located at the second point 82, the processor 10 grasps that the present location of the autonomous movement device 100 is the second point 82 and the autonomous movement device 100 faces in the direction opposite to the direction toward the first point 81 by comparing the surrounding environment 60e detected by the sensor 31 with the first point data (the surrounding environment 60a) and the second point data (the surrounding environment 60e) registered in the point storage 21. In this case, the movement controller 15 is to, after controlling the driven wheels 40 to change the direction of the autonomous movement device 100 to the opposite direction, control the driven wheels 40 to cause the autonomous movement device 100 to move to the first point 81 along the movement path as described above.

In addition, it is assumed that, subsequently, teaching in which the autonomous movement device 100 follows the user from the third point 83 to the fourth point 84 is performed through the above-described target following memorizing processing. Then, as a result of the target following memorizing processing, the third point data and the fourth point data are also registered in the point storage 21 in addition to the first point data and the second point data. A route from the third point 83 to the fourth point 84 (second teaching route) and a surrounding environment along the route are also recorded in the route storage 22. In addition, since the third point 83 exists on the route from the first point 81 to the second point 82 (first teaching route) that was first taught, the processor 10 grasps the fact that the third point 83 is a point existing on the first teaching route, which is recorded in the route storage 22.

It is assumed that the autonomous movement device 100 receives an instruction to start playback from the user when the autonomous movement device 100 is located at the fourth point 84 while facing in the direction toward the third point 83 (step S201). As with the above-described case where playback is started from the second point 82, the processor 10 compares a surrounding environment 60k detected by the sensor 31 with the first point data (the surrounding environment 60a), the second point data (the surrounding environment 60e), the third point data (the surrounding environment 60h), and the fourth point data (the surrounding environment 60j) that are registered in the point storage 21.

Then, since, as described above, the surrounding environment 60k and the surrounding environment 60j match with each other in an angular range of 90 degrees on each of the right and left sides, the processor 10 is able to determine that the present location is the fourth point 84. Therefore, the determination in step S202 results in Yes, and the processor 10 acquires the fourth point 84 as the present location (step S203).

The movement path generator 13 generates a movement path from the present location to the destination (step S204). In this example, since the first point data, the second point data, the third point data, and the fourth point data are registered in the point storage 21 and the present location is the fourth point 84, the user is requested to determine which one of the first point 81, the second point 82, and the third point 83 is to be set as a destination and to input the determined destination from the operation acquirer 32. In this example, it is assumed that the user specifies the second point 82 as the destination.

Then, the movement path generator 13 generates, as a movement path from the fourth point 84 to the second point 82, a route that tracks the second teaching route, which was recorded in the route storage 22 at the time of target following memorizing processing, in the backward direction until reaching the third point 83 and subsequently tracks the first teaching route, which was recorded in the route storage 22, to the second point 82 in the direction in which the autonomous movement device 100 followed the user from an intermediate point on the first teaching route. Note that, since, when the third point 83 is registered in the point storage 21 in the above-described teaching playback processing, the processor 10 grasps the fact that the third point 83 is a point on the first teaching route, the processor 10 can recognize that the second teaching route is connected to the first teaching route at the third point 83. In this way, the movement path generator 13 is capable of generating a movement path that is formed by arbitrarily connecting teaching routes having been recorded up to that time to one another.

The surrounding information converter 14 converts, among the route data memorized in the route storage 22, the surrounding environments 60h and 60i, which were detected by the sensor 31 when the autonomous movement device 100 followed the user along the second teaching route, to data in the case where the surrounding environments are detected in the backward direction and thereby generates backward direction data (backward direction data 60h' and 60i'), and records the backward direction data in the route storage 22.

While the processor 10 grasps the present location and direction of the autonomous movement device 100, the movement controller 15 controls the driven wheels 40 in such a way that the autonomous movement device 100 moves along the movement path (step S205). In the example in FIG. 9, since there exists no obstacle, the determination in step S206 results in No, and the autonomous movement device 100 keeps moving along the movement path until reaching the destination (second point 82) and, when arriving at the destination (second point 82) (step S207; Yes), stops (step S208).

Note that, since, in step S205, the autonomous movement device 100 tracks the second teaching route in the backward direction between the fourth point 84 and the third point 83, the processor 10, by comparing a surrounding environment detected by the sensor 31 with the backward direction data (for example, the backward direction data 60h' and 60i') generated by the surrounding information converter 14, grasps the present location and direction of the autonomous movement device 100. In addition, since the autonomous movement device 100 tracks the first teaching route in the forward direction between the third point 83 and the second point 82, the processor 10, by comparing a surrounding environment detected by the sensor 31 with the surrounding environment (for example, the surrounding environments 60c, 60d, and 60e) memorized in the route storage 22, grasps the present location and direction of the autonomous movement device 100.

In this way, the autonomous movement device 100 is capable of not only moving along a taught route, using the taught route in a direction (in the above-described example, the backward direction) other than the direction of movement at the time when the route was taught but also moving along a route that is formed by combining a plurality of taught routes.

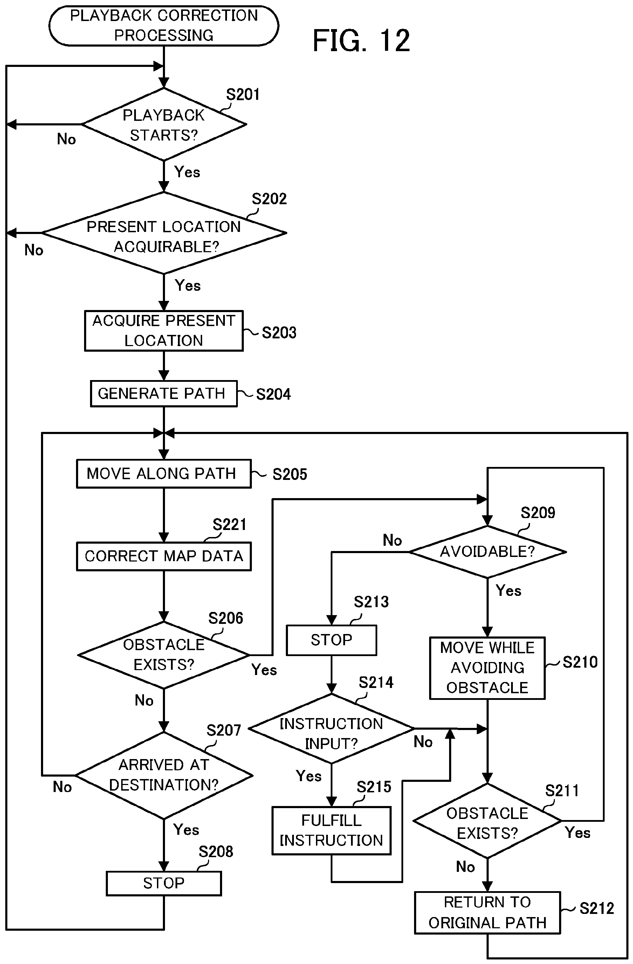

Next, the playback correction processing of the autonomous movement device 100 is described below with reference to FIG. 12. As described above, execution of the playback correction processing is also started when the autonomous movement device 100 is activated, and the autonomous movement device 100 is brought into a state of waiting for input of a user instruction from the operation acquirer 32.

In addition, only difference between the playback correction processing and the above-described playback processing (FIG. 10) is that step S221 is executed between step S205 and step S206. Therefore, description is made focusing on step S221.

As described above, while the autonomous movement device 100 moves in step S205, the processor 10 grasps the present location and direction of the autonomous movement device 100, using a surrounding environment detected by the sensor 31 and the route data recorded in the route storage 22. On that occasion, in the above-described playback processing, when, in particular, information about retro reflective materials does not match with the route data, the processor 10 determines that it is highly possible that the autonomous movement device 100 has deviated from the original route.

In contrast, in the playback correction processing, when a surrounding environment detected by the sensor 31 and the route data recorded in the route storage 22 do not match with each other, the processor 10 considers the surrounding environment detected by the sensor 31 as correct data and corrects the route data recorded in the route storage 22 (step S221).

Since, when this correction is constantly performed, there is a possibility that movement of the autonomous movement device 100 becomes unstable rather than stable, objects to be used in the correction may be limited to retro reflective materials. That is, it may be configured such that, when a surrounding environment and the route data do not match with each other, information about retro reflective materials included in the surrounding environment is used for correction of the route data and information about objects included in the surrounding environment other than retro reflective materials is used for correction of the present location and direction of the autonomous movement device 100 by comparing the information with the route data.

As described above, in the playback correction processing, it is also possible to correct the route data when a portion of the surrounding environment has changed (for example, a case where, in a distribution warehouse, loads piled up on a pallet that had existed until yesterday have disappeared today). In addition, by adding retro reflective materials to retro reflective materials having already been installed on a wall of a corridor, or the like, it is possible to improve precision of subsequent playback processing.

In addition, the processor 10 may memorize a temporary stop position P1 and a temporary stop time T1 at the time when the autonomous movement device 100 follows a recognized following target (at the time of controlling the driven wheels 40 in accordance with teaching control data) in the above-described target following memorizing processing, and, when the autonomous movement device 100 moves along a memorized movement path (at the time of the playback processing or the playback correction processing), control the autonomous movement device 100 to stop at the temporary stop position P1 for the temporary stop time T1. This is because, when, for example, an automatic shutter exists on a movement path that the autonomous movement device 100 memorized, by storing the location of the automatic shutter and causing the autonomous movement device 100 to temporarily stop in front of the automatic shutter until the shutter door is fully opened, it is possible to cause the autonomous movement device 100 to move more flexibly. It may be configured such that storage of the temporary stop position P1 and the temporary stop time T1 can be performed while the target following memorizing processing is performed or can be performed in the form of editing memorized data after the target following memorizing processing is finished.

In addition, the processor 10 may memorize an output position P2 at which a control signal S is output to a predetermined device (and a temporary stop time T2, when necessary) at the time when the autonomous movement device 100 follows a recognized following target (at the time of controlling the driven wheels 40 in accordance with teaching control data) in the above-described target following memorizing processing, and, when the autonomous movement device 100 moves along a memorized movement path (at the time of the playback processing or the playback correction processing), perform control in such a way as to output the control signal S at the output position P2 at which a signal is output to the predetermined device and thereby cause the predetermined device to operate (or prevent the predetermined device from operating). For example, it is assumed that, when the processor 10 is capable of storing 4-bits output patterns "0000" to "1111", "0001" and "0000" are defined as an output pattern of a control signal S1 for disconnecting a connection mechanism by which a towable pallet dolly or the like is connected to the autonomous movement device 100 and an output pattern of a control signal S2 for not disconnecting the connection mechanism, respectively. Then, it is possible to memorize a setting for, by outputting the control signal S1 having the output pattern "0001" at the predetermined output position P2, disconnecting the connection mechanism by which the towable pallet dolly or the like is connected to the autonomous movement device 100 (and, further, temporarily stopping for the time T2 required for the disconnection), a setting for, by outputting the control signal S2 having the output pattern "0000", not disconnecting the connection mechanism by which the towable pallet dolly or the like is connected to the autonomous movement device 100, or the like. Because of this configuration, it becomes possible to select whether or not the autonomous movement device 100 disconnects the connection mechanism by which the towable pallet dolly or the like is connected to the autonomous movement device 100 and leaves the loads at a predetermined position on a movement path that the autonomous movement device 100 memorized, and thereby cause the autonomous movement device 100 to move more flexibly. It may be configured such that storage of the output position P2 at which a control signal is output and the temporary stop time T2 can be performed while the target following memorizing processing is performed or can be performed in the form of editing memorized data after the target following memorizing processing is finished. Note that the autonomous movement device 100 may include an ultraviolet radiation lamp as the predetermined device. Then, the "output of a control signal to a predetermined device" can be used for on/off control of the ultraviolet radiation lamp in a similar manner to the above-described example. For example, it is possible to, by outputting the control signal S at the output position P2, perform control in such a manner as to cause the ultraviolet radiation lamp to operate (or stop operating).

In addition, the autonomous movement device 100 may be configured to be capable of storing, in place of the output position P2, a condition C for outputting the control signal S. That is, the processor 10 may memorize the condition C for outputting the control signal S to a predetermined device at the time when the autonomous movement device 100 follows a recognized following target (at the time of controlling the driven wheels 40 in accordance with teaching control data) in the above-described target following memorizing processing, and, when the autonomous movement device 100 moves along a memorized movement path (at the time of the playback processing or the playback correction processing), perform control in such a way as to output the control signal S to the predetermined device when the condition C is satisfied and thereby cause the predetermined device to operate (or prevent the predetermined device from operating). For example, by causing a condition C requiring that "the sensor 31 detects that a person has come close to the autonomous movement device 100" to be memorized, the processor 10 can perform control in such a way as to stop radiation of ultraviolet rays when the sensor 31 detects that a person is coming close to the autonomous movement device 100. In addition, the predetermined device may be configured to be changeable between at the time of teaching and at the time of playback. For example, when, while it is desirable to radiate ultraviolet rays at the time of playback, it is desirable not to radiate ultraviolet rays at the time of teaching (however, it is desirable to confirm how the ultraviolet radiation is performed, using a pilot lamp or the like), the predetermined device may be able to be set in such a way that "a pilot lamp is turned on at the time of teaching and an ultraviolet radiation lamp is turned on at the time of playback". This setting enables the autonomous movement device 100 to be configured to stop the ultraviolet radiation and allow an output signal to be confirmed by another pilot lamp or the like during teaching and to radiate ultraviolet rays during playback. This configuration enables ultraviolet rays to be radiated to only a specific site and radiation of ultraviolet rays to be stopped when a person is present near the autonomous movement device 100.

Further, the autonomous movement device 100 may be configured to be capable of selecting a velocity mode. Examples of the velocity mode include a teaching velocity mode (a mode in which an actual velocity at the time when the target following teaching or the manual operation teaching is performed is memorized and, at the time of playback, the autonomous movement device 100 moves at the same velocity as the velocity at the time of teaching) and a set velocity mode (a mode in which the user can memorize an arbitrary control velocity as a velocity at the time of playback and, at the time of playback, the autonomous movement device 100 moves at the memorized control velocity). The processor 10 can select a velocity mode in the above-described target following memorizing processing and memorizes the selected velocity mode in conjunction with the route data.

When the set velocity mode is selected as a velocity mode, the processor 10 may memorize a control velocity that the user sets at the time when the autonomous movement device 100 follows a recognized following target (at the time of controlling the driven wheels 40 in accordance with teaching control data) in the above-described target following memorizing processing, and, when the autonomous movement device 100 moves along a memorized movement path (at the time of the playback processing or the playback correction processing), control the autonomous movement device 100 to move at the control velocity memorized at the time when the autonomous movement device 100 followed a recognized following target. Alternatively, when the teaching velocity mode is selected as a velocity mode, the processor 10 may memorize an actual velocity at the time when the autonomous movement device 100 follows a following target in the above-described target following memorizing processing, and, when the autonomous movement device 100 moves along a movement path (at the time of the playback processing or the playback correction processing), control the autonomous movement device 100 to move at the same velocity as the velocity at the time of teaching.

As described above, the processor 10 may memorize a velocity mode that the user selects or a control velocity that the user sets at the time when the autonomous movement device 100 follows a recognized following target (at the time of controlling the driven wheels 40 in accordance with teaching control data) in the above-described target following memorizing processing, and, when the autonomous movement device 100 moves along a movement path (at the time of the playback processing or the playback correction processing), control the driven wheels 40 to control movement velocity based on the memorized velocity mode or control velocity. Because of this configuration, it becomes possible to cause the autonomous movement device 100 to move at a desirable velocity at the time of playback. It may be configured such that storage of a control velocity or a velocity mode can be performed while the target following memorizing processing is performed or can be performed in the form of editing memorized data after the target following memorizing processing is finished. It may also be configured such that, as the control velocity, velocity at an arbitrary position on a movement path can be memorized. For example, as control velocity at the time of traveling straight, a comparatively high velocity may be memorized, and, as control velocity at the time of turning, a comparatively low velocity may be memorized. In addition, it may be configured such that a plurality of control velocities can be memorized in such a way that a different control velocity can be set depending on a condition. For example, it may be configured to memorize a comparatively low velocity as control velocity in the case where a load is heavier than a standard weight (for example, 10 kg) and memorize a comparatively high velocity as control velocity in the case where a load is less than or equal to the standard weight.

Note that causing various data as described above (the temporary stop position P1, the time T1, the control signal S, the output position P2, the condition C, the velocity mode, the control velocity, and the like) to be additionally memorized in memorized data is applicable to not only the case of target following teaching in which teaching is performed by causing the autonomous movement device 100 to recognize and follow a following target but also the case of manual operation teaching in which teaching is performed using the operation acquirer 32, such as a joystick.

### Variations

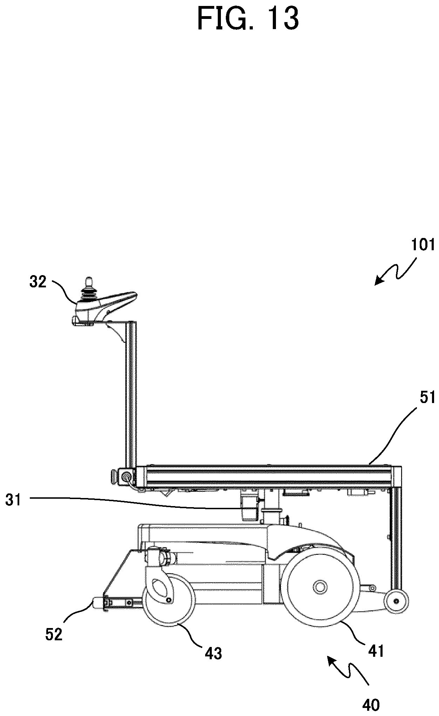

Although, in the autonomous movement device 100, the sensor 31 is disposed above the operation acquirer 32, as illustrated in FIG. 2, the installation position of the sensor 31 is not limited to this position. For example, as illustrated in FIG. 13, an autonomous movement device 101 according to a variation of Embodiment 1 includes a sensor 31 below a loading platform 51. Although, as described above, the autonomous movement device 100 is capable of detecting an obstacle, using only the sensor 31, since the autonomous movement device 101 according to the variation is capable of detecting an obstacle from a lower position, it becomes possible to avoid even a comparatively small obstacle.

Note that, regarding an obstacle, a dedicated sensor to detect an obstacle may be installed separately from the sensor 31. As for the dedicated sensor to detect an obstacle, installing, for example, a bumper sensor in the bumper 52 is conceivable. In this case, when the processor 10, using the bumper sensor, detects that the autonomous movement device 100 or 101 has come into contact with an obstacle, the processor 10 is capable of performing processing like causing the autonomous movement device 100 or 101 to stop, to slightly retreat, and the like.

Note that the respective functions of the autonomous movement device 100 or 101 can also be implemented by a general computer, such as a personal computer (PC). Specifically, in the above-described embodiment, the description was made assuming that programs of the target following memorizing processing, the playback processing, and the like that the autonomous movement device 100 or 101 performs are memorized in advance in the ROM in the storage 20. However, a computer capable of achieving the above-described functions may be configured by storing programs in a non-transitory computer-readable recording medium, such as a flexible disk, a compact disc read only memory (CD-ROM), a digital versatile disc (DVD), a magneto-optical disc (MO), a memory card, and a universal serial bus (USB) memory, and distributing the recording medium and reading and installing the programs in the computer. A computer capable of achieving the above-described functions may also be configured by distributing programs via a communication network, such as the Internet, and reading and installing the programs in the computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

10 Processor
11 Surrounding information acquirer
12 Route generator
13 Movement path generator
14 Surrounding information converter
15 Movement controller
20 Storage
21 Point storage
22 Route storage
31 Sensor
32 Operation acquirer
40 Driven wheels
41 Wheel
42 Motor
43 Caster
51 Loading platform
52 Bumper
60 Dotted line
60a, 60b, 60c, 60d, 60e, 60f, 60h, 60i, 60j, 60k, 60m, 60n Surrounding environment
60a', 60b', 60c', 60d', 60h', 60i' Backward direction data
60ef Shaded portion
61 Person
62 Movement path
63, 64 Retro reflective material
65, 66 User
67, 68 Avoidance path
71 Wall
72, 73, 74 Obstacle
81, 82, 83, 84 Point
100, 101 Autonomous movement device
311 Optical window
312 Laser
313Rotational axis
321 Lever
322 Touch panel

## Claims

1. An autonomous movement device comprising:
detection means for detecting a surrounding object;
movement means; and
control means,
wherein the control means
acquires teaching control data,
generates route data of a surrounding environment based on a point cloud detected by the detection means while controlling the movement means in accordance with the acquired teaching control data, and
memorizes a movement path along which the movement means moves in the generated route data.

2. The autonomous movement device according to claim 1, wherein the control means
recognizes a following target from among objects detected by the detection means, and
acquires data for controlling the movement means to cause the autonomous movement device to follow the recognized following target as the teaching control data.

3. The autonomous movement device according to claim 2, wherein the control means
generates route data of a surrounding environment based on a point cloud detected by the detection means while controlling the movement means to cause the autonomous movement device to follow the recognized following target,
memorizes a movement path along which the movement means moves in the generated route data, and
controls the movement means to cause the autonomous movement device to move along the memorized movement path, and
the memorized movement path includes a movement path in a direction other than a direction of movement at a time when the autonomous movement device followed the following target.

4. The autonomous movement device according to claim 1 further comprising operation acquisition means for acquiring a user operation,
wherein the control means acquires the teaching control data by the operation acquisition means.

5. The autonomous movement device according to any one of claims 1 to 4, wherein the control means, at a time of controlling the movement means in accordance with the acquired teaching control data, performs control in such a way as to prevent the autonomous movement device from moving backwards.

6. The autonomous movement device according to any one of claims 1 to 5, wherein the control means
registers a first point based on input of an instruction to start teaching, generates route data of a surrounding environment based on a point cloud detected by the detection means while controlling the movement means in accordance with the acquired teaching control data, and memorizes a movement path along which the movement means moves in the generated route data,
registers a second point based on input of an instruction to end teaching and terminates teaching,
records a movement path from the first point to the second point as a first teaching route,
generates a movement path from a predetermined point existing on the first teaching route to the first point or the second point, and
controls the movement means to cause the autonomous movement device to move along the generated movement path.

7. The autonomous movement device according to claim 6, wherein the control means, by using the first teaching route in a backward direction, generates a movement path from the second point to the first point.

8. The autonomous movement device according to claim 6 or 7, wherein the control means,
on the first teaching route, registers a third point based on an instruction to start teaching, generates route data of a surrounding environment based on a point cloud detected by the detection means while controlling the movement means in accordance with the acquired teaching control data, and memorizes a movement path along which the movement means moves in the generated route data,
registers a fourth point based on an instruction to end teaching and terminates teaching,
records a movement path from the third point to the fourth point as a second teaching route, and
by using the first teaching route and the second teaching route, generates a movement path from a predetermined point existing on the first teaching route or the second teaching route to a point selected from among the first point, the second point, the third point, and the fourth point.

9. The autonomous movement device according to any one of claims 6 to 8, wherein the control means,
in a case of generating a movement path in an opposite direction to a direction of movement at a time of having controlled the movement means in accordance with the teaching control data,
converts data relating to a location of a surrounding object detected by the detection means to data in a case of detecting the object in a backward direction, and
based on the converted data, controls the movement means to cause the autonomous movement device to move along the generated movement path.

10. The autonomous movement device according to any one of claims 1 to 9, wherein the control means
recognizes an obstacle from among objects detected by the detection means, and
when the recognized obstacle is avoidable, controls the movement means to cause the autonomous movement device to deviate from the movement path in order to avoid the obstacle and, after avoiding the obstacle, return to the movement path.

11. The autonomous movement device according to any one of claims 1 to 10, wherein
the detection means detects a retro reflective material installed in surroundings, and
the control means
records information about a retro reflective material detected by the detection means in the route data while controlling the movement means in accordance with the teaching control data, and
corrects a location and direction of the autonomous movement device by comparing information about a retro reflective material detected by the detection means with information about a retro reflective material recorded in the route data while the autonomous movement device moves along the movement path.

12. The autonomous movement device according to any one of claims 1 to 11, wherein the control means corrects the route data by comparing data relating to a location of a surrounding object detected by the detection means with the route data while the autonomous movement device moves along the movement path.

13. The autonomous movement device according to any one of claims 1 to 12, wherein
the control means memorizes a temporary stop position and a temporary stop time at a time of controlling the movement means in accordance with the teaching control data, and
when the autonomous movement device moves along the memorized movement path, the autonomous movement device stops at the temporary stop position for the temporary stop time.

14. The autonomous movement device according to any one of claims 1 to 13, wherein the control means
memorizes an output position at which a control signal to a predetermined device is output at a time of controlling the movement means in accordance with the teaching control data, and
when the autonomous movement device moves along the memorized movement path, outputs the control signal to the predetermined device at the output position.

15. The autonomous movement device according to any one of claims 1 to 14, wherein the control means
memorizes a control velocity or a velocity mode at a time of controlling the movement means in accordance with the teaching control data, and
when the autonomous movement device moves along the memorized movement path, controls the movement means to control movement velocity based on the memorized control velocity or velocity mode.

16. An autonomous movement method comprising:
a teaching control data acquisition step of acquiring teaching control data;
a route generation step of generating route data of a surrounding environment based on a point cloud detected by detection means while controlling movement means in accordance with the acquired teaching control data; and
a movement path storage step of storing a movement path along which the movement means moves in the generated route data.

17. A program causing a computer to execute:
a teaching control data acquisition step of acquiring teaching control data;
a route generation step of generating route data of a surrounding environment based on a point cloud detected by detection means while controlling movement means in accordance with the acquired teaching control data; and
a movement path storage step of storing a movement path along which the movement means moves in the generated route data.
